# EUROPEAN PATENT SPECIFICATION

(11) **EP 3 812 215 B1**
(45) Date of publication and mention of the grant of the patent: **10.08.2022**
(21) Application number: 20203018.5
(22) Date of filing: 21.10.2020
(51) Int. Cl.: B60R 11/02, B64D 11/00

(54) **ELECTRONIC DEVICE HOLDER**
HALTERUNG FÜR ELEKTRONISCHES GERÄT
SUPPORT POUR APPAREIL ÉLECTRONIQUE

(30) Priority: 23.10.2019 IT 201900019628
(43) Date of publication of application: 28.04.2021
(73) Proprietor: Geven S.p.A., 80035 Nola (NA) (IT)
(72) Inventor: VENERUSO, Alberto, 80035 Nola (NA) (IT)
(74) Representative: Leone, Mario

(56) References cited:
- EP-A1- 2 746 158
- EP-A1- 2 810 808
- WO-A1-2016/197104
- DE-A1-102018 103 057
- FR-A1- 2 965 768
- US-A1- 2012 120 626
- US-A1- 2018 072 424

## Description

The present invention relates to an electronic device holder such as *smartphone* or *tablet,* known in the art with the acronym PED (*Personal Electronic Device*) which designates the personal electronic devices, and which have a tablet-like shape with different sizes, with a *touch screen* which occupies almost wholly a face of the device, which acts as *display* and as interface with the user.

As it is known, these devices accompany the users for most part of the day, and the time spent travelling is no exception and, on the contrary, it is often used to consult this kind of devices, often to watch videos, to read, or to consult images or documents.

Onboard vehicles such as aircrafts or trains, especially when the seats are arranged on parallel rows, but even onboard motor vehicles, making use of these electronic devices involves the fact of keeping them with one or both hands, but this can tire the user, and the device runs the risk of falling onto the floor.

On the other hand, even when shelves reclining on the back of the seatbacks are available, resting these devices in a comfortable position for viewing the *display,* that it vertical or tilted position, involves a precarious equilibrium, and an engagement of the space of the object-holding shelf which cannot be intended for other uses.

For this reason, the user likes very much the presence of a holder allowing to arrange its own device frontally, on the back of the seatback of the seat in front of one's own seat, so as to have it in a position in which both viewing *display* and using the interface are facilitated.

Then, it is necessary to keep into consideration the fact that the users could have electronic devices of different formats, such as for example *smartphone,* the diagonal measure thereof substantially varies from 4.5" to 6.5", or *tablet,* the diagonal measure thereof substantially varies from 7" to 12", but there are even devices of intermediate format, such as the readers for books in electronic format (*ebook reader*)*,* the diagonal measure thereof substantially varies from 6" to 9". All these devices can be used in order to make use of videos, to read, or to consult images, documents or Internet sites, and then it is requested that a holder could be used for devices of any format.

However, the presence of projecting hooks and resting bases could result to be uncomfortable and undesirable to the user when the electronic devices are not in use, therefore it is required that the electronic device holder has no holds and projections. Ideally, the holder, if not in use, should be virtually invisible and occupy a minimum space.

Moreover, when the holder is in use, it has to guarantee to the device the maximum stability and protection, even in presence of vibrations, jolts and jerks caused by the vehicle. Another purpose of the holder is to interfere as little as possible with possible cables for the recharge, or cables for headphones and the like.

At last, the holder should have a structure so that the weights, the control of which is fundamental in particular on aircrafts, should be minimum.

An electronic device holder is known from the registration of design in USA No. USD 73,960 S, with four arms and ending hooks connecting to the angles of the electronic device.

US patent No. 8,205,938 B2 describes a folding shelf in a seat for aircrafts including an electronic device holder system.

Another holder, which uses projecting teeth to implement resting elements for the device edges, is known from US patent No. US 2013/0001382 A1; and another solution of holder integrated in a backseat is described in Italian patent No. IT 1,417,101 B.

German patent application No. DE 10 2018 103,057 A1 describes an electronic device holder according to the preamble of claim 1, with revolving supporting arms.

Other examples of electronic device holders associated to the back of a seatback are described in European patent application No. EP 2,746,158 A1, in US patent applications No. US 2012/0,120,626 A1 and No. 2018/0,072,424 A1, and in International patent application No. WO 2016/197,104 A1.

The technical problem underlying the present invention is to provide a holder allowing to obviate the drawbacks mentioned with reference to the known art, at the same time by implementing the above-described purposes.

Such problem is solved by a holder as specified above which has a plate-like shape which adheres to a holding surface, and which includes in its thickness an extendable arm projecting from the upper edge thereof, which can be extracted vertically, and which characterizes in that it comprises:
- a first holding element capable of rotating from a vertical position adhered to the extendable arm or to the holder to a position rotated upwards; and
- a second holding element capable of rotating from a vertical position adhered to the extendable arm or to the holder itself to a position wherein it acts as resting bracket;
said first and second holding elements being arranged to receive respective edges of an electronic device and being provided with a respective first and second locking tooth, wherein the second holding element is hinged to the lower end of a pivoting arm, in turn hinged in proximity of the outlet hole of said extendable arm from the holder, which is capable of rotating from a position adhered to the holder to a tilted position.

The main advantage of the electronic device holder according to the present invention lies in the fact of allowing the holder itself to adapt to any format of electronic device, *smartphone, tablet* or other, with a light structure and without producing unwished projections when not in use.

The present invention will be described hereinafter according to a preferred embodiment example thereof, provided by way of example and not for limitative purposes with reference to the enclosed drawings wherein:
* figure 1 shows a front view of an electronic device holder according to a first embodiment of the present invention;
* figure 1A shows a side view of the holder of figure 1;
* figure 2 shows the view of figure 1, wherein the holder is engaged by a *smartphone*;
* figures 2A and 2B show a side view of the holder in the configuration of figure 2, and a side view of the holder in a tilted configuration, arranged for a *smartphone,* respectively;
* figure 3 shows the view of figure 1, wherein the holder is engaged by a *tablet*;
* figures 3A e 3B show a side view of the holder in the configuration of figure 3, and a side view of the holder in a tilted configuration, arranged for a *tablet,* respectively;

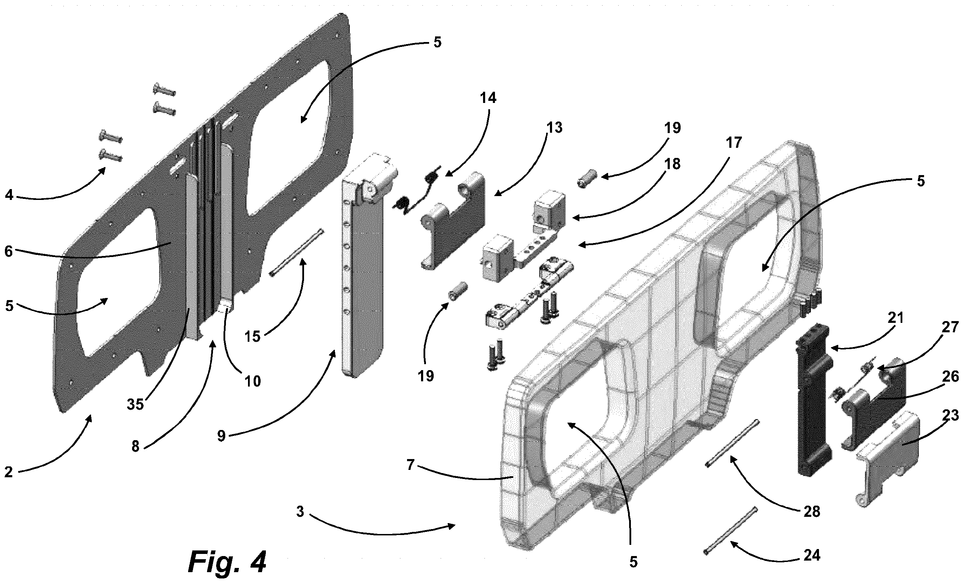

* figure 4 shows an axonometric and exploded view of the holder of figure 1;
* figure 5 shows an axonometric and exploded view of a second embodiment of an electronic device holder according to the invention; and
* figure 5A shows an enlargement of a detail of the holder of figure 5.

With reference to the figures, an electronic device holder is designated with 1; it is of the type suitable to be fastened to the back of a seat seatback, in particular of a seat with reclining seatback, of the type used on aircrafts, but it is meant that the same holder can be fastened to a holding surface in turn in front of a seat occupied by a user, onboard any vehicle or even in other contexts, such as stadiums, cinemas, conference rooms and so on.

The holder 1 has a plate-like shape, with a thickness which is obtained by coupling a fastening base 2 with a front mask 3, both having flat shapes and connected by locking elements 4 of the screw or snap type, with possible seats 4'. The fastening base 2 has a rear surface which, in the present example, suits to the surface of the back of the seatback which receives it and thereto it adheres. In the present example, it has an elongated shape, apt to be arranged with the side having greater extension horizontally, and with a width larger than that of a *tablet* of big format. It has two symmetrical openings 5, which occupy most part of the overall surface, and which are surrounded by solid portions of the fastening base, in particular with a central vertical strip 6 separating the two openings 5.

The front mask 3 has a shape which couples with that of the fastening base 2, then with said openings 5, and it has, on its own external and internal edges, that is those of said openings 5, a projecting edge 7, defining the thickness of the holder 1 and determines, between base 2 and mask 3, an empty space.

The mask 2, at said central strip 6, has projecting and vertical ribs 35 defining a guide 8, wherein an extendable arm 9 is inserted, which moves vertically and which projects from the upper edge of the holder 1. The guide 8 has a lower stop 10 preventing the extendable arm 9, which has the form of an elongated table, from falling down. The extendable arm 9 has recesses 11 on each side edge, the function thereof will be described hereinafter; moreover, it has an upper end 12 thereto a first resting element 13 is revolvingly connected, which has the shape of a plate and it is hinged to said end so that it adheres to the mask 3, pushed by a first helical spring 14 wound onto the first axis 15 of a first hinge 32 formed at said upper end 12.

However, it is meant that the first resting element 13 can be lifted from its vertical position to a substantially horizontal position. In this respect, it has a distal edge, opposite to the hinge, having a first locking tooth 16 faced downwards, arranged to interfere with an edge of an electronic device which could be both a *smartphone* S positioned vertically and a *tablet* T positioned horizontally.

The first helical spring 14 pushes the first resting element 13 downwards, so that the first locking tooth adheres to the mask 3. Besides, if pushed upwards, the first resting element can rotate by 90° and beyond, by extending the space available between itself and a lower resting element which will be described hereinafter, by adapting the holder 1 to different formats and positions of the electronic devices.

An arm-positioning mechanism 17 is fastened onto the mask 3, at the hole produced by an interruption of the edge 7 which allows the extendable arm 9 to project from its upper end 12, which mechanism is fastened to the base 2 with two fixed elements 18 positioned at the side edge of the extendable arm 9, therefrom two elastic buttons 19 project inside, the shape thereof is so as to insert into said recesses 11: in this way, the arm 9 can project above from the top of the holder 1 and remain still in a position selected by the user depending upon the height and/or width of the electronic device, generally designated with P.

On the mask 3, still at the hole therefrom the extendable arm 9 extends, a second hinge 20 is formed, thereto the upper end of a pivoting arm 21 is revolvingly connected, formed too by a solid and elongated strip, which rests upon the exposed surface of the mask 3, and then it is faced towards the user, but it can be detached therefrom.

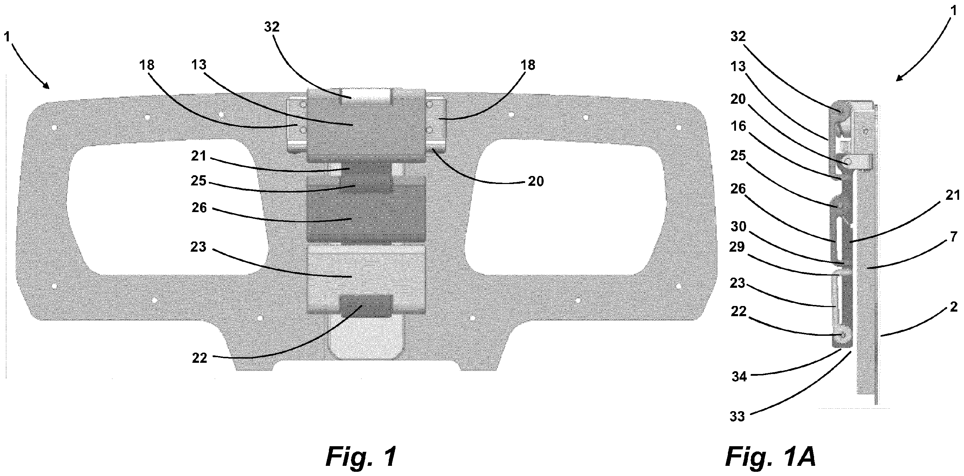

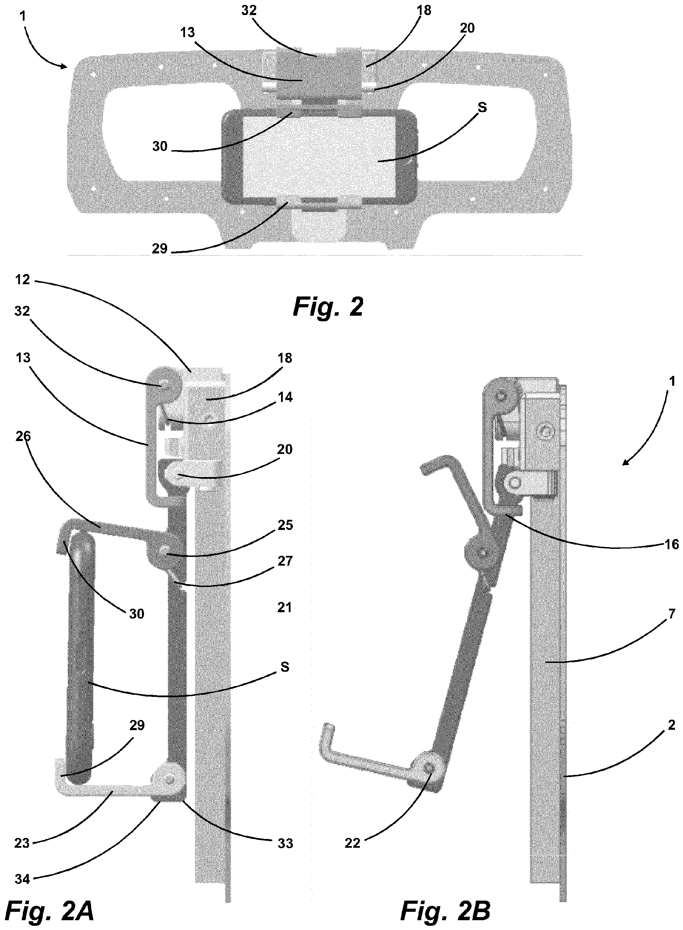

The rotation of the second hinge 20 is braked by an internal friction, so that the pivoting arm 21 could be arranged in a position tilted and fixed with respect to the mask 3 (figure 2B), on the contrary the arm 21 adhering to the mask 3 when the holder 1 is not used (figure 1A).

On the pivoting arm 21 a third hinge 22 is formed at the lower end thereof 33, which is positioned substantially at the internal edge of the holder 1.

To said third hinge 22 a second resting element 23 is connected, wholly similar in the shape to the first resting element 13, and hinged to said end so that it adheres to the pivoting arm 21 in vertical position, with a second hinge axis 24 whose rotation is braked by a friction inside the third hinge 22, so that the second resting element 23 does not fall by gravity if adhered to the pivoting arm 21.

Said lower end 33, at the third hinge 22, has a stopping projection 34 which prevents the second resting element 23 from rotating more than 90°: when the second resting element 22 is detached from the pivoting arm 21 and rotated downwards by 90°, it forms a projecting bracket with the pivoting arm 21, which acts as resting plane for the lower edge of any electronic device, in any position.

Moreover, on the pivoting arm 21, in proximity of said second hinge 20, a fourth hinge 25 is formed thereto a third resting element 26 is connected, wholly similar by shape, function and rotation capability to the above first resting element 13, and hinged so that it adheres to the pivoting arm 21 in vertical position, pushed downwards by a second helical spring 27 wound onto the second axis 28 of the fourth hinge 25.

Even the second and the third resting element 23, 26, on their own distal edge, opposite to the respective hinge 22, 25, have a second and a third locking tooth 29, 30, faced upwards and downwards, respectively, and arranged to interfere with an edge of an electronic device which could be both a *smartphone* S and a *tablet* T.

With reference to the third resting element 26, the respective spring 27 allows it to rotate more than 90°, by extending the space available between itself and the lower resting element constituted by the second resting element 23, by adapting the holder 1 to different formats of electronic devices.

Figure 1A shows the three resting elements 13, 23, 26 each one in its resting position, adhered to the mask 3 and to the pivoting arm 21 pushed by the respective springs. Their adherence, and the fact that the respective locking teeth 16, 29, 30 are faced towards the mask 3, that is the holder 1, determines a surface substantially without projections and footholds which could cause discomforts to the user.

Figures 2 and 2A show a configuration wherein the holder 1 is engaged by a *smartphone* S, whose lower edge is rested upon the target lower resting element, that is the second resting element 23 which, if open, assumes a fixed position. The upper edge of the *smartphone* S, instead, is locked by the locking tooth 30 of the third resting element 26, which is rotated even more than 90° both to allow to insert the *smartphone* S and to adapt to its width, then by arranging the *smartphone* S horizontally. Moreover (figure 2B), the *display* of *smartphone* S can be tilted by making the pivoting arm 21 to pivot and by keeping it in tilted position.

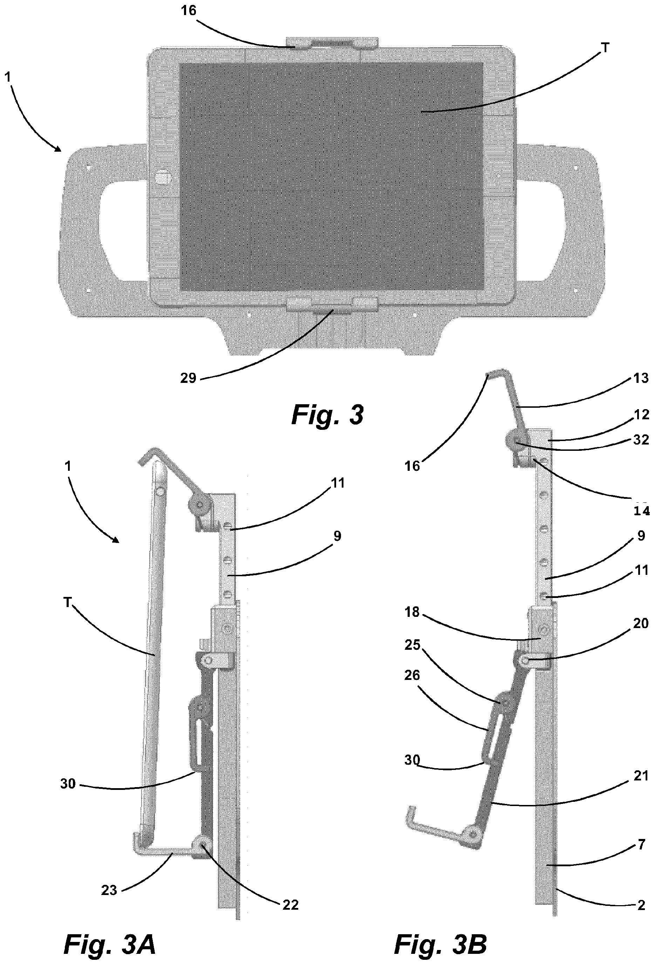

Figures 3 and 3A show a configuration wherein the holder 1 is engaged by a *tablet* T, but what follows is valid also for a *smartphone* S arranged in vertical position, therefore in each case the lower edge of the device is rested upon the target lower resting element, that is the second resting element 23 which, if opened, assumes a fixed position. The upper edge of the device is locked by the first locking tooth 16 of the first resting element 13, which is rotated even more than 90° both to allow to insert the *tablet* T or the *smartphone* S and to adapt to its cross width.

It is to be noted that, by extending the extendable arm 9 wholly out of the holder 1 it is possible to widen the space available between the lower resting element and the upper locking element, that is from the first locking tooth 16 of the first resting element 13 rotated more than 90°, until making possible to insert a *tablet* or an *ebook reader* in vertical position.

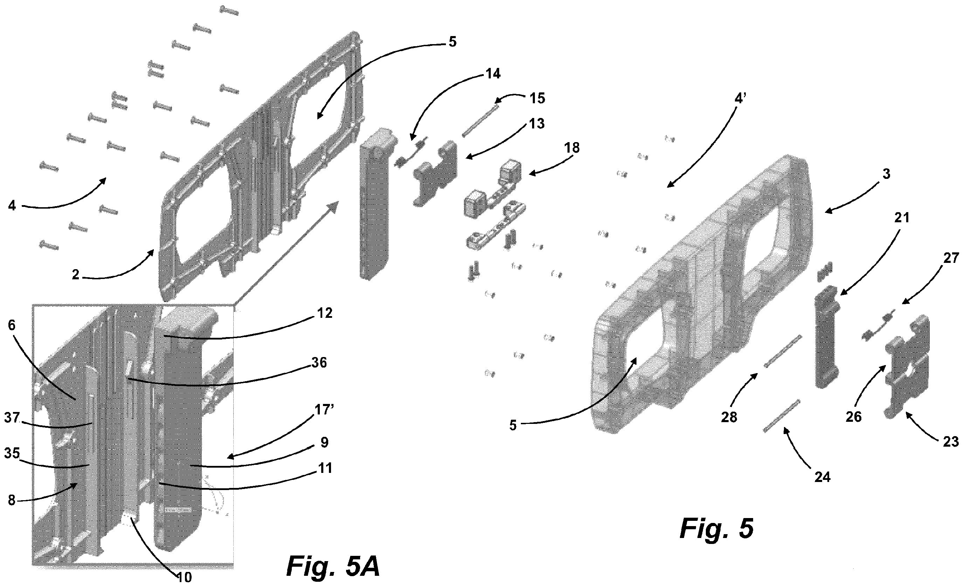

With reference to figure 5, a second embodiment of the holder 1 of the preceding figures is described, having a different positioning mechanism of the extendable arm 9, designated with 17'.

It is integrated in the guide 8 of the extendable arm 9 which, as mentioned previously, has two projecting ribs 35 therebetween the arm 9 is inserted. In the ribs 35 respective retractable teeth 36 are formed, formed by injection in the same thickness of the ribs 35 (figure 5A): the teeth are positioned on the top of a foil-like arm 37 which acts elastically, so that the retractable teeth insert in the recesses 11 of the side edge of the extendable arm 9, which then can assume different positions by moving vertically.

The retractable teeth 36 then act analogously to the elastic push-buttons 19 of the first embodiment, as contrast elements of the positioning mechanism 17, 17', still on side recesses of the extendable arm 9.

In the resting elements 13, 23, 26 as well as in the extendable arm 9, in the mask 3 and in the pivoting arm 21 magnetic elements could be inserted, for example in the shape of small plates or buttons which could be drowned in the thicknesses or arranged in specific recesses which, when the surfaces of the above-mentioned elements are adjacent and/or in contact, keep them in that position, so that it is necessary to apply a certain force, by the user, to move them between their different positions.

For the same reason, all or a portion of the above-mentioned hinges 20, 22, 25, 32 could be of the braked type.

Passages and slits could further be provided, formed by indentations and openings, which allow the passage of connecting cables, in particular positioned at the doors of the portable electronic devices.

To the above-described electronic device holder a person skilled in the art, with the purpose of satisfying additional and contingent needs, could introduce several modifications and variants, however all comprised within the protective scope of the present invention, as defined by the enclosed claims.

## Claims

1. An electronic device holder (1) of the type suitable to be fastened to the back of a seat seatback or to a holding surface in front of a user, which has a plate-like shape adhering to said holding surface, and which includes in its thickness an extendable arm (9) projecting from the upper edge thereof, through an outlet hole, which can be extracted vertically and having:
• a first holding element (13) capable of rotating from a vertical position adhered to the extendable arm (9) or to the holder (1) to a position rotated upwards; and
• a second holding element (23) capable of rotating from a vertical position adhered to the extendable arm (9) or to the holder (1) to a position wherein it acts as resting bracket;
said first and second holding elements (13, 23) being arranged to receive respective edges of an electronic device (S, T) and being provided with a respective first and second locking tooth (16, 29), **characterized in that** the second holding element (23) is hinged to the lower end of a pivoting arm (21), in turn hinged in proximity of an outlet hole of said extendable arm (9) from the holder (1), which is capable of rotating from a position adhered to the holder (1) to a tilted position.

2. The holder (1) according to claim 1, wherein the rotation of the second resting element (23) is braked by a friction inside the respective hinge (22) so that, if adhered to the pivoting arm (21) in vertical position, it remains in such position.

3. The holder (1) according to claim 1, wherein the rotation del pivoting arm (21) is braked by a friction inside the respective hinge (20) so that, if tilted with respect to the holder (1), it remains in such position.

4. The holder (1) according to claim 1, wherein the first resting element (13) has a locking tooth (16) projecting downwards from a distal edge, opposite to the hinge (32) of the first resting element (13).

5. The holder (1) according to claim 1, wherein the first resting element (13) is kept in vertical position by a spring (14), being able to rotate upwards in opposition thereto.

6. The holder (1) according to claim 1, wherein il second resting element (23) has a locking tooth (29) projecting upwards from a distal edge, opposite to the hinge (22) of the second resting element (23).

7. The holder (1) according to claim 1, having a third resting element (26) hinged to said pivoting arm (21) in proximity of its respective hinge (20) and capable of rotating from a vertical position adhered to the tilted arm (21) to a position rotated upwards.

8. The holder (1) according to claim 7, wherein the third resting element (26) has a locking tooth (30) projecting downwards from a distal edge, opposite to the hinge (25) of the third resting element (26).

9. The holder (1) according to claim 7, wherein the third resting element (26) is kept in vertical position by a spring (27), being able to rotate upwards in opposition thereto.

10. The holder (1) according to claim 1, wherein a snap-positioning mechanism (17. 17') is provided to extract and arrange said extendable arm (9) in a prefixed position, comprising contrast elements (19, 36) acting elastically on recesses (11) formed on each side edge of the extractable arm (9).

## Patentansprüche

1. Halter (1) für ein elektronisches Gerät des Typs, der geeignet ist, an der Rückseite einer Sitzlehne oder an einer Haltefläche vor einem Benutzer befestigt zu werden, der eine plattenartige Form hat, die an der Haltefläche haftet, und der in seiner Dicke einen ausziehbaren Arm (9) umfasst, der von dessen oberer Kante durch ein Austrittsloch vorsteht, der vertikal herausgezogen werden kann und Folgendes aufweist:
• ein erstes Halteelement (13), das in der Lage ist, aus einer vertikalen Position, die an dem ausfahrbaren Arm (9) oder an dem Halter (1) haftet, in eine nach oben gedrehte Position gedreht zu werden; und
• ein zweites Halteelement (23), das in der Lage ist, aus einer vertikalen Position, die an dem ausfahrbaren Arm (9) oder an dem Halter (1) haftet, in eine Position gedreht werden kann, in der es als Ruhebügel wirkt;
wobei die ersten und zweiten Halteelemente (13, 23) so angeordnet sind, dass sie jeweilige Kanten eines elektronischen Geräts (S, T) aufnehmen und mit einem jeweiligen ersten und zweiten Verriegelungszahn (16, 29) versehen sind, **dadurch gekennzeichnet, dass** das zweite Halteelement (23) am unteren Ende eines Schwenkarms (21) angelenkt ist, der seinerseits in der Nähe eines Austrittslochs des ausfahrbaren Arms (9) von dem Halter (1) angelenkt ist, der in der Lage ist, sich aus einer am Halter (1) haftenden Position, anhaftenden Position in eine gekippte Position zu drehen.

2. Halter (1) nach Anspruch 1, wobei die Drehung des zweiten Auflageelements (23) durch eine Reibung innerhalb des jeweiligen Scharniers (22) gebremst wird, so dass es, wenn es an dem Schwenkarm (21) in vertikaler Position haftet, es in einer solchen Position verbleibt.

3. Halter (1) nach Anspruch 1, wobei die Drehung des Schwenkarms (21) durch eine Reibung innerhalb des jeweiligen Scharniers (20) gebremst wird, so dass er, wenn er in Bezug auf den Halter (1) gekippt wird, in dieser Position verbleibt.

4. Halter (1) nach Anspruch 1, wobei das erste Auflageelement (13) einen Verriegelungszahn (16) aufweist, der von einer distalen Kante gegenüber dem Scharnier (32) des ersten Auflageelements (13) nach unten vorsteht.

5. Halter (1) nach Anspruch 1, wobei das erste Auflageelement (13) durch eine Feder (14) in vertikaler Position gehalten wird, wobei es in der Lage ist, sich entgegen dieser nach oben zu drehen.

6. Halter (1) nach Anspruch 1, wobei das zweite Auflageelement (23) einen Verriegelungszahn (29) aufweist, der von einer distalen Kante nach oben vorsteht, gegenüber dem Scharnier (22) des zweiten Auflageelements (23).

7. Halter (1) nach Anspruch 1, aufweisend ein drittes Auflageelement (26), das an dem Schwenkarm (21) in der Nähe seines jeweiligen Scharniers (20) angelenkt ist und das in der Lage ist, aus einer vertikalen Position, in der es an dem geneigten Arm (21) haftet, in eine nach oben gedrehte Position zu drehen.

8. Halter (1) nach Anspruch 7, wobei das dritte Auflageelement (26) einen Verriegelungszahn (30) aufweist, der von einer distalen Kante nach unten vorsteht, gegenüber dem Scharnier (25) des dritten Auflageelements (26).

9. Halter (1) nach Anspruch 7, wobei das dritte Auflageelement (26) durch eine Feder (27) in vertikaler Position gehalten wird, wobei es in der Lage ist, sich entgegen dieser nach oben zu drehen.

10. Halter (1) nach Anspruch 1, wobei ein Schnapppositioniermechanismus (17, 17') bereitgestellt ist, um den ausfahrbaren Arm (9) herauszuziehen und in einer vorfixierten Position anzuordnen, aufweisend Kontrastelemente (19, 36), die elastisch auf Aussparungen (11) wirken, die an jeder Seitenkante des ausziehbaren Arms (9) ausgebildet sind.

## Revendications

1. Support pour dispositif électronique (1) du type adapté pour être fixé à l'arrière d'un dossier de siège ou à une surface de maintien en face d'un utilisateur, qui présente une forme de plaque adhérant à ladite surface de maintien, et qui inclut dans son épaisseur un bras extensible (9) faisant saillie de l'arête supérieure de celui-ci, à travers un trou de sortie, qui peut être extrait verticalement et ayant :
- un premier élément de maintien (13) capable de tourner d'une position verticale collée au bras extensible (9) ou au support (1) dans une position tournée vers le haut ; et
- un deuxième élément de maintien (23) capable de tourner d'une position verticale collée au bras extensible (9) ou au support (1) dans une position, dans laquelle il agit comme un étrier de repos ;
lesdits premier et second éléments de maintien (13, 23) étant agencés pour recevoir des arêtes respectives d'un dispositif électronique (S, T) et étant dotés d'une première et seconde dent de verrouillage (16, 29) respective, **caractérisé en ce que** le second élément de maintien (23) est articulé à l'extrémité inférieure d'un bras de pivotement (21), articulé à son tour à proximité d'un trou de sortie dudit bras extensible (9) du support (1) qui est capable de tourner d'une position collée au support (1) dans une position inclinée.

2. Support (1) selon la revendication 1, dans lequel la rotation du deuxième élément de repos (23) est freinée par une friction à l'intérieur de l'articulation (22) respective de sorte que s'il est collé au bras de pivotement (21) en position verticale, il reste dans une telle position.

3. Support (1) selon la revendication 1, dans lequel la rotation du bras de pivotement (21) est freinée par une friction à l'intérieur de l'articulation (20) respective de sorte que s'il est incliné par rapport au support (1), il reste dans une telle position.

4. Support (1) selon la revendication 1, dans lequel le premier élément de repos (13) présente une dent de verrouillage (16) faisant saillie vers le bas depuis une arête distale, opposée à l'articulation (32) du premier élément de repos (13).

5. Support (1) selon la revendication 1, dans lequel le premier élément de repos (13) est maintenu en position verticale par un ressort (14), étant capable de tourner vers le haut en opposition à celui-ci.

6. Support (1) selon la revendication 1, dans lequel le deuxième élément de repos (23) présente une dent de verrouillage (29) faisant saillie vers le haut depuis une arête distale, opposée à l'articulation (22) du deuxième élément de repos (23).

7. Support (1) selon la revendication 1, ayant un troisième élément de repos (26) articulé audit bras de pivotement (21) à proximité de son articulation (20) respective et capable de tourner depuis une position verticale collée au bras incliné (21) dans une position tournée vers le haut.

8. Support (1) selon la revendication 7, dans lequel le troisième élément de repos (26) présente une dent de verrouillage (30) faisant saillie vers le bas depuis une arête distale, opposée à l'articulation (25) du troisième élément de repos (26).

9. Support (1) selon la revendication 7, dans lequel le troisième élément de repos (26) est maintenu en position verticale par un ressort (27), étant capable de tourner vers le haut en opposition à celui-ci.

10. Support (1) selon la revendication 1, dans lequel un mécanisme de positionnement par enclenchement (17, 17') est prévu pour extraire et agencer ledit bras extensible (9) dans une position préfixée, comprenant des éléments de contraste (19, 36) agissant élastiquement sur des évidements (11) formés sur chaque arête latérale du bras extractible (9).
